# FASCICULE DE BREVET EUROPEEN

(11) **EP 1 965 079 B1**
(45) Date de publication et mention de la délivrance du brevet: **12.09.2018**
(21) Numéro de dépôt: 08101756.8
(22) Date de dépôt: 19.02.2008
(51) Int. Cl.: F03G 7/06, G05D 23/02

(54) **Procédé de fabrication d'un actionneur à vérin thermique et actionneur à vérin thermique**
Herstellungsverfahren eines Schalters mit Überstromrelais und Schalter mit Überstromrelais
Method of producing a thermal actuator and thermal actuator

(30) Priorité: 02.03.2007 FR 0753615
(43) Date de publication de la demande: 03.09.2008
(73) Titulaire: DAUPHINOISE THOMSON SAS, 38035 Grenoble (FR)
(72) Inventeur: Segura, Jean-Louis, 38500, VOIRON (FR)
(74) Mandataire: Zapalowicz, Francis

(56) Documents cités:
- DE-A1- 19 954 916
- FR-A- 2 256 621
- FR-A- 2 731 475
- US-A- 5 738 658

## Description

La présente invention concerne le domaine des actionneurs à vérin thermique.

On appelle « vérin thermique » un organe d'actionnement qui comprend un corps de forme générale cylindrique dont la paroi d'extrémité avant est traversée par une tige axiale d'actionnement. Ce corps est rempli d'un produit dilatable, en général d'une cire, dont le volume varie avec la température, permettant ainsi un mouvement axial de la tige d'actionnement par rapport au corps.

Il est connu d'associer à la paroi arrière d'un tel vérin thermique une pastille chauffante incluant une résistance électrique, par exemple une résistance céramique ou à semi-conducteur, c'est-à-dire à consigne de température positive dite CTP. Le brevet FR-A- 2 731 475 décrit un dispositif de montage dans lequel une pastille chauffante est collée contre la face arrière du vérin thermique et dans lequel une bague rigide en matière plastique est montée à force sur la partie arrière du corps du vérin, cette bague portant des languettes de connexion électrique de la pastille chauffante.

Par ailleurs, le brevet DE-A- 199 54 916 décrit un actionneur qui comprend des pièces préfabriquées maintenues par des moyens d'assemblage à l'intérieur d'un carter, dont certaines sont adaptées pour coulisser les unes par rapport aux autres, avec interposition entre elles d'un vérin thermique muni d'une pastille et d'un ressort de contact, le corps et la tige du vérin thermique étant respectivement placés, lors du montage, en contact axial avec les pièces coulissantes.

La présente invention un perfectionnement aux moyens utilisant des vérins thermiques.

Selon un aspect de l'invention, il est proposé un procédé de fabrication d'un actionneur comprenant un vérin thermique comprenant un corps, qui présente une face arrière, une face périphérique et une face avant, et une tige d'actionnement traversant la face avant du corps, et comprenant en outre une pastille thermique de chauffage et/ou de refroidissement, dont une face avant est couplée thermiquement à la face arrière du corps, et un élément de montage présentant une partie annulaire entourant au moins une partie arrière de la face périphérique du corps et la face périphérique de la pastille thermique et une partie arrière recouvrant au moins partiellement la face arrière de la pastille thermique.

Ce procédé consiste à placer, dans une cavité d'un moule, la pastille thermique et le vérin thermique, ladite cavité étant telle qu'il subsiste un espace en creux correspondant audit élément de montage à réaliser ; et à injecter, dans ledit espace, une matière plastique de remplissage, de façon à constituer un élément de montage.

Ladite matière plastique de remplissage peut être élastique.

Ladite matière de remplissage peut comprendre une matière thermoplastique.

Le procédé peut consister à interposer, entre la face avant de la pastille thermique et la face arrière du corps du vérin, une couche en un matériau conducteur électrique et thermique.

Le procédé peut consister à exercer une pression d'application de la face avant de la pastille thermique sur la face arrière du corps du vérin.

Selon un autre aspect de l'invention, il est proposé un actionneur comprenant un vérin thermique comprenant un corps, qui présente une face arrière, une face périphérique et une face avant, et une tige d'actionnement traversant la face avant du corps, et comprenant en outre une pastille thermique constituant une résistance électrique, dont une face avant est couplée thermiquement à la face arrière du corps, et un élément de montage présentant une partie annulaire entourant la face périphérique du corps et celle de la pastille thermique et une partie arrière recouvrant partiellement la face arrière de la pastille thermique, dans lequel ledit élément de montage est en une matière élastique.

Ledit élément de montage peut comprendre une matière thermoplastique.

L'actionneur peut comprendre, entre la face avant de la pastille thermique et la face arrière du corps du vérin, une couche en un matériau conducteur électrique et thermique.

La face périphérique du corps du vérin peut présenter au moins une partie en creux, ledit élément de montage pénétrant dans cette partie en creux.

Selon un autre aspect de l'invention, il est proposé un procédé de fabrication d'un actionneur comprenant un vérin thermique comprenant un corps, qui présente une face arrière, une face périphérique et une face avant, et une tige d'actionnement traversant la face avant du corps, et comprenant en outre une pastille thermique comprenant une résistance électrique, dont une face avant est couplée thermiquement à la face arrière du corps, et un support comprenant une cavité de réception du corps et de la pastille thermique.

Le procédé consiste à fabriquer un support comprenant une cavité dont la paroi présente des parties de positionnement destinées à être en contact avec le corps du vérin et la pastille thermique et au moins une partie en creux destinée à former avec le corps et la pastille thermique un espace en creux ; à placer la pastille thermique et le corps du vérin dans ladite cavité ; et à injecter, dans ledit espace en creux, une matière de remplissage.

Le procédé peut consister à fabriquer un support dont ladite partie en creux est ouverte vers l'extérieur ; à placer la pastille thermique et le corps du vérin dans ladite cavité ; à fermer ledit espace en creux par un moule ; et à injecter, dans ledit espace en creux, une matière de remplissage constituant un élément de montage.

Le procédé peut consister à fabriquer un support muni de languettes de connexion électrique s'étendant dans ladite cavité et destinées à venir en contact avec la face arrière de la pastille thermique et la face périphérique du corps du vérin.

Le procédé peut consister à fabriquer un support dont la partie en creux est ouverte vers l'extérieur et présentant des gorges extérieures prolongeant ladite cavité ; à munir ledit support de languettes de connexion électrique s'étendant dans ladite cavité et dans lesdites gorges extérieures et destinées à venir en contact avec la face arrière de la pastille thermique et la face périphérique du corps du vérin ; à fermer ledit espace en creux et lesdites gorges par un moule ; et à injecter ladite matière de remplissage dans ledit espace en creux et lesdites gorges.

Le procédé peut consister à exercer une pression d'application de la face avant de la pastille thermique sur la face arrière du corps du vérin.

Selon un autre aspect de l'invention, il est proposé un actionneur comprenant un vérin thermique comprenant un corps, qui présente une face arrière, une face périphérique et une face avant, et une tige d'actionnement traversant la face avant du corps, et comprenant en outre une pastille thermique comprenant une résistance électrique, dont une face avant est couplée thermiquement à la face arrière du corps, et un support comprenant une cavité de réception du corps du vérin et de la pastille thermique.

Ledit support délimite un espace en creux comprenant une partie annulaire entourant au moins une partie arrière de la face périphérique du corps du vérin et la face périphérique de la pastille thermique et une partie arrière correspondant au moins en partie à la face arrière de la pastille thermique ; et que ledit espace en creux est rempli d'une matière de remplissage constituant un élément de montage.

Ledit support peut comprendre, dans ladite cavité, des moyens de positionnement du corps du vérin thermique et de la pastille thermique.

Ledit support peut comprendre, dans ladite cavité, des nervures en saillie, le corps du vérin présentant un épaulement périphérique avant en appui sur lesdites nervures.

Ledit espace en creux peut s'étendre jusqu'à une face avant du support.

Des languettes de connexion électrique extérieure peuvent s'étendre dans ledit espace et être en contact respectivement avec la face arrière de la pastille thermique et le corps du vérin.

Ledit support peut présenter des gorges extérieures débouchant dans ledit espace et dans lesquelles s'étendent lesdites languettes de connexion électrique.

Lesdites gorges peuvent être remplies, au moins en partie, par ladite matière de remplissage.

Ledit support comprend un évidement extérieur de réception d'un connecteur électrique, lesdites languettes comprenant des parties adaptées pour venir en contact avec des contacts électriques de ce connecteur électrique.

La matière de remplissage peut être un thermoplastique, éventuellement élastique.

La présente invention sera mieux comprise à l'étude d'actionneurs décrits à titre d'exemples non limitatifs et illustrés par le dessin sur lequel :
- La figure 1 représente une vue de côté partiellement en coupe d'un premier actionneur selon l'invention ;
- La figure 2 représente une vue arrière de l'actionneur de la figure 1 ;
- La figure 3 représente l'actionneur de la figure 1, installé dans un moule en coupe longitudinale ;
- La figure 4 représente une vue de côté partiellement en coupe d'une variante de réalisation de l'actionneur de la figure 1 ;
- La figure 5 représente une coupe longitudinale d'un second actionneur selon l'invention ;
- La figure 6 représente une vue de dessus de l'actionneur de la figure 5 ;
- La figure 7 représente une vue de dessus de l'actionneur de la figure 5, sans son vérin thermique et sans son élément de montage ;
- La figure 8 représente une coupe longitudinale selon VIII-VIII de la figure 7 ;
- La figure 9 représente une coupe longitudinale selon IX-IX de la figure 7, avec le vérin thermique ;
- La figure 10 représente une coupe longitudinale selon VIII-VIII de la figure 7, avec le vérin thermique ;
- La figure 11 représente une vue de dessus de l'actionneur de la figure 5, sans l'élément de montage ;
- La figure 12 représente une coupe transversale de la figure 9 selon XII-XII ;
- Et la figure 13 représente une coupe longitudinale de l'actionneur de la figure 5, sur une machine d'injection.

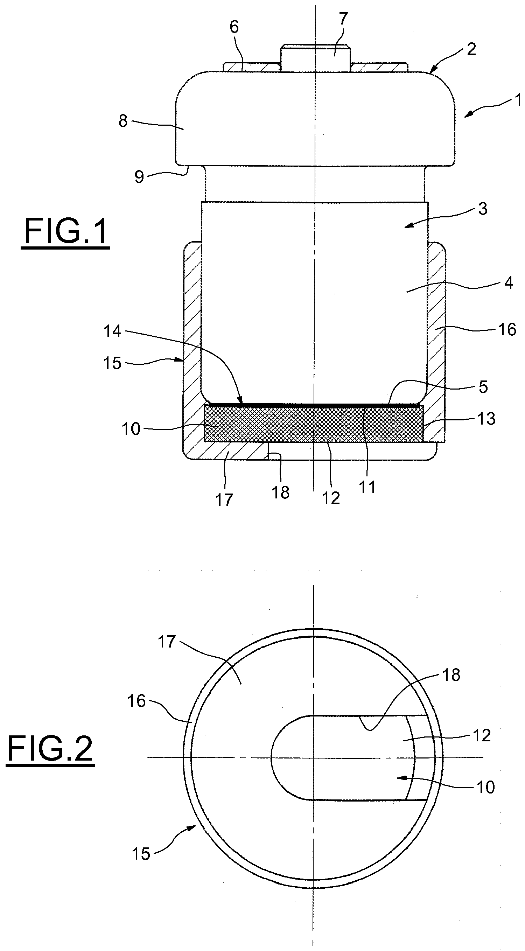

En se reportant aux figures 1 à 4, on va décrire un premier actionneur thermique 1 et son mode de fabrication.

L'actionneur 1 comprend un vérin thermique 2 qui comprend un corps 3 de forme générale cylindrique, qui présente une face périphérique 4, une face radiale arrière 5 et une face radiale avant 6, ainsi qu'une tige axiale d'actionnement 7 qui traverse la face avant 6. Le corps 3 présente une partie annulaire avant 8 en saillie qui détermine un épaulement annulaire 9 orienté vers l'arrière.

L'actionneur 1 comprend en outre une pastille thermique 10, cylindrique, qui peut avantageusement être constituée par une résistance céramique ou à semi-conducteur, c'est-à-dire à consigne de température positive dite CTP, dont les faces avant et arrière 11 et 12 constituant des électrodes. La pastille 10 est placée axialement au vérin thermique 2, sa face radiale avant 11 étant couplée thermiquement et électriquement à la face arrière 5 du corps 3 et sa face périphérique 13 étant légèrement à l'intérieur de la face périphérique 4 du corps 3 du vérin 2.

Entre la face arrière 5 du corps 3 et la face avant 11 de la pastille thermique 10 est interposée une couche 14 électriquement et thermiquement conductrice, non adhésive, par exemple une graisse ou une pâte contenant des particules de d'un matériau conducteur tel que de l'argent, du cuivre ou de l'aluminium.

L'actionneur 1 comprend en outre un élément de montage 15 en une matière élastique, par exemple en une matière thermoplastique telle qu'une matière à base de polyamide, qui comprend une partie annulaire 16 qui entoure la partie arrière de la face périphérique 4 du corps 3 du vérin 2 et la périphérie de la pastille thermique 10 et qui comprend une partie radiale arrière 17 qui s'étend sur la face arrière 12 de la pastille thermique 10 et qui présente une échancrure 18 de façon à recouvrir partiellement cette face arrière 12.

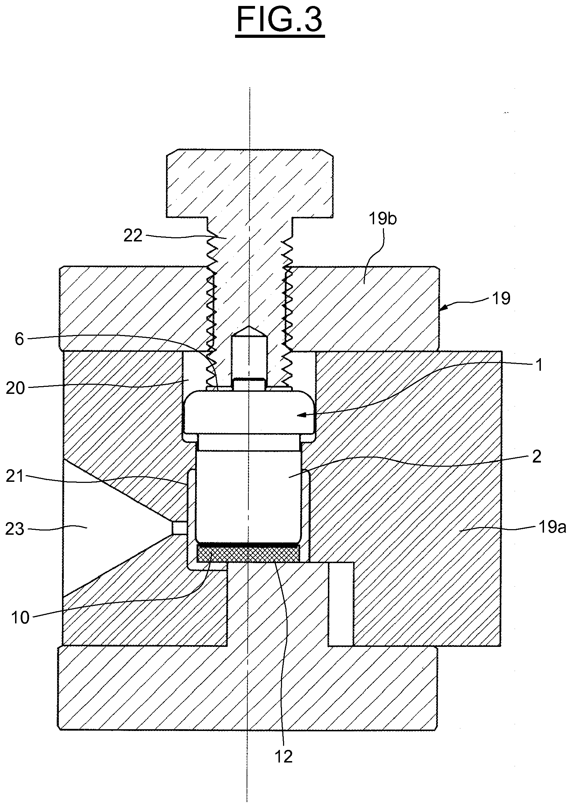

Comme le montre la figure 3, l'élément de montage 15 est fabriqué par surmoulage dans un moule 19 qui détermine, entre deux parties 19a et 19b, une cavité 20 de réception du vérin thermique 2 et de la pastille 10 et qui délimite un espace en creux 21 correspondant à l'élément de montage 15 à réaliser.

Avantageusement, le moule 19 est équipé d'un organe de pression 22 agissant sur la face avant 6 du corps 3 du vérin 2 de façon à appliquer l'une sur l'autre la face arrière 5 du corps 3 du vérin 2 et la face avant 11 de la pastille thermique 10, par l'intermédiaire de la couche conductrice 14, en appliquant la face arrière 11 de la pastille 10 contre le fond du moule correspondant à l'échancrure 18, ce qui provoque un bon étalement de la couche conductrice 14.

Ayant ainsi disposé le vérin thermique 2 et la pastille thermique 10 dans le moule 19, on procède à l'injection de la matière choisie pour constituer l'élément de montage 15 dans l'espace en creux 21, par exemple au travers d'un orifice d'injection 23.

Après démoulage, l'élément de montage 15 enserre élastiquement la partie arrière du corps 3 du vérin 2 et la pastille thermique 10, en s'y agrippant, et assure ainsi le maintien et l'encapsulation de façon étanche de la pastille thermique 10.

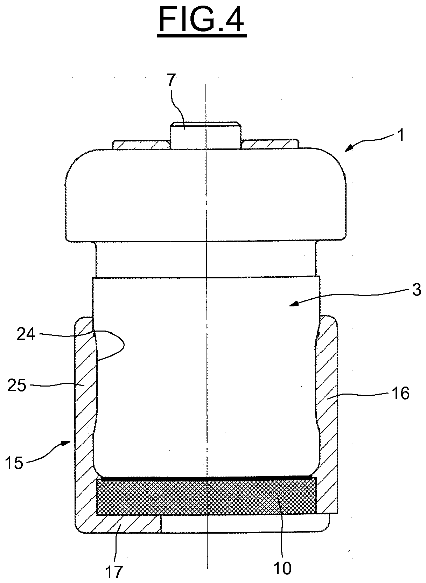

Pour améliorer encore le montage, il peut être avantageux que, comme le montre la figure 4, la face périphérique 4 du corps 3 du vérin thermique 2 présente une partie annulaire en creux 24, de telle sorte que la partie annulaire 16 de l'élément de montage surmoulé 15 présente une partie intérieure en saillie 25 engagée dans cette partie en creux 24.

L'actionneur 1 peut être installé dans un appareillage à commander sous l'effet du déplacement de la tige d'actionnement 7 par rapport au corps 3 du vérin thermique 2, en exerçant les efforts entre la tige d'actionnement 7 et l'épaulement 9 du corps 3 de façon à éviter de contraindre la pastille chauffante 10 et l'élément de montage 15.

Cet appareillage comprend de préférence, afin de piloter la pastille chauffante 10, des languettes de connexion électrique venant respectivement en contact avec la partie avant du corps 3 électriquement relié à la face avant 11 de la pastille chauffante 10, par l'intermédiaire de la couche conductrice 14, et en contact avec la partie découverte de la face arrière 12 de la pastille chauffante 10.

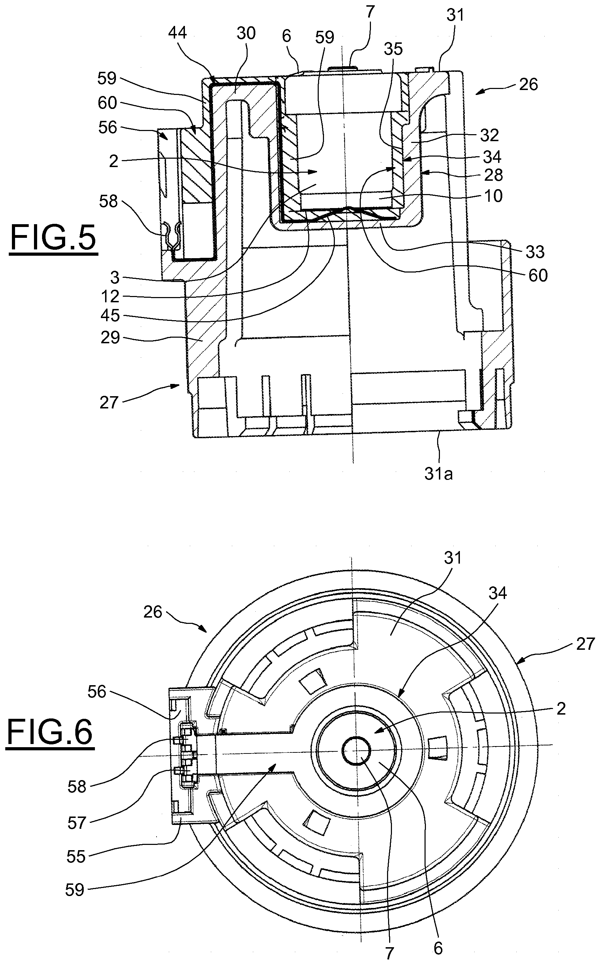

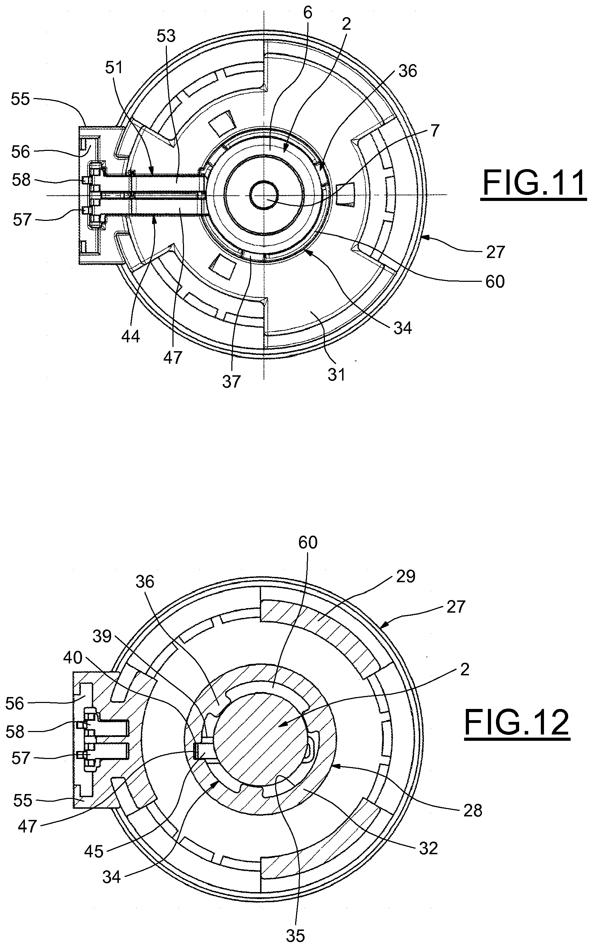

En se reportant aux figures 5 à 13, on va maintenant décrire un second actionneur thermique 26 et son mode de fabrication.

Plus particulièrement en référence aux figures 5, 6 et 12, on peut voir que cet actionneur 26 comprend, par exemple, le vérin thermique 2 et la pastille thermique 10 de l'exemple décrit en référence aux figures 1 à 4.

L'actionneur 26 comprend en outre un support rigide 27, par exemple moulé en matière plastique, qui présente, co-axialement, une partie cylindrique intérieure 28 et une partie cylindrique extérieure 29 qui sont reliées à l'une de leurs extrémités par une partie radiale avant 30, déterminant une face radiale avant 31.

La partie cylindrique intérieure 28 comprend une paroi cylindrique 32 et une paroi radiale arrière 33, qui délimite une cavité longitudinale 34 en forme de puits, ouverte vers l'avant, dans laquelle se loge l'empilage constitué par le corps 3 du vérin thermique 2 et la pastille thermique 10 de la manière suivante.

La face intérieure 35 de la paroi cylindrique 32 s'étend à distance de la face périphérique 4 du corps 3 du vérin thermique 2 et de la face périphérique 13 de la pastille 10.

La paroi cylindrique 32 présente, intérieurement, trois nervures longitudinales de positionnement 36, réparties à 120°, en contact de positionnement avec la face périphérique 4 du corps 3, les nervures 36 s'étendant vers l'avant jusqu'en arrière de la partie avant en saillie 8 du corps 3 du vérin 2, son épaulement 9 venant en appui sur les faces radiales d'extrémité 37 des nervures 36.

Les faces radiales d'extrémité 37 des nervures 36 sont en arrière de la face avant 31 du support 27 et sont placées de telle sorte que la face avant 6 du corps 3 du vérin thermique 2 et la face avant 31 du support 27 soient sensiblement dans le même plan. De plus, la face arrière 12 de la pastille thermique 10 est en contact sur le fond 38 de la cavité 34 ou à faible distance de ce dernier.

En référence en particulier aux figures 5, 7, 8, 10 et 11, on peut voir que, dans la cavité 34, sont ménagées une rainure 39 dans le fond 38 de la cavité 34, c'est-à-dire dans la paroi radiale 33, et une rainure longitudinale 40 dans la face intérieure 35 de la paroi cylindrique 32, ces rainures 39 et 40 se rejoignant.

Dans la face avant 31 du support 27 est ménagée une rainure 41 qui la traverse et qui rejoint la rainure 40 et dans la face périphérique extérieure 42 de la partie cylindrique extérieure 29 du support 27 est ménagée une rainure longitudinale 43 qui rejoint la rainure 41.

Le support 27 est équipé d'une languette métallique de connexion électrique 44 qui présente des branches 45, 46, 47 et 48 qui sont respectivement disposées au fond des rainures 39, 40, 41 et 42. la branche 45 est arquée de façon à être élastiquement en contact avec la face arrière 12 de la pastille chauffante 10.

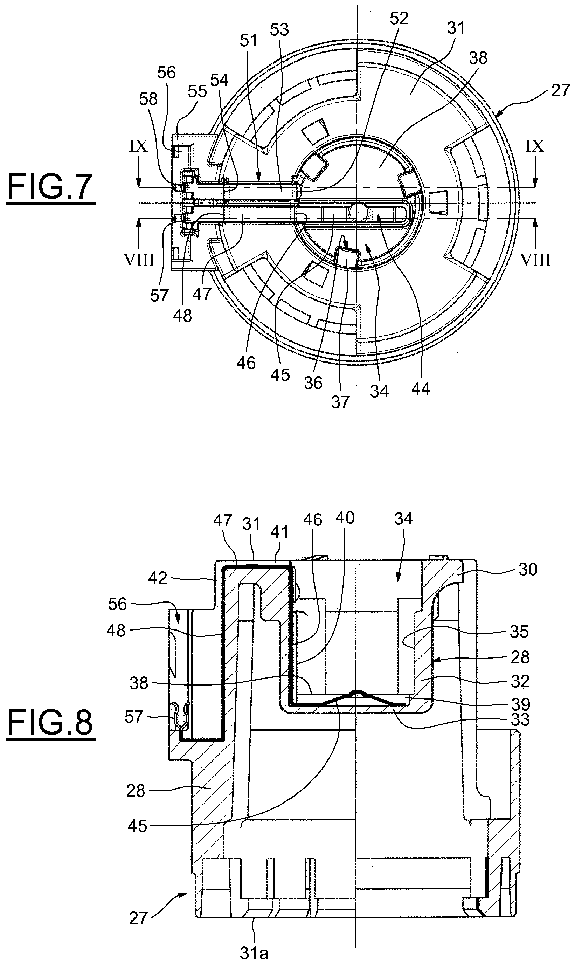

En référence en particulier aux figures 7, 9, 11 et 13, on peut voir que, de façon décalée dans le sens périphérique par rapport aux rainures 41 et 42, le support 27 présente, dans sa face avant 31, une rainure 49 qui la traverse et dans la face périphérique extérieure 42 de la partie cylindrique extérieure 29 une rainure longitudinale 50.

Le support 27 est équipé d'une languette métallique de connexion électrique 51 qui présente une branche 52 qui s'étend dans la cavité 34 et qui vient élastiquement en contact avec la face périphérique de la partie en saillie 8 du corps 3 du vérin thermique 2 et des branches 53 et 54 qui s'étendent au fond des rainures 49 et 50.

La partie cylindrique extérieure 29 du support 27 présente, extérieurement, des parties en saillie opposées 55 qui délimitent un évidement 56 destiné à recevoir un connecteur électrique non représenté, les languettes 44 et 51 présentant des portions d'extrémité 57 et 58 constituant des contacts susceptibles de venir en contact avec des contacts correspondants d'un tel connecteur électrique, dans le but de piloter la pastille thermique 10.

Comme le montre plus particulièrement les figures 5 et 6, l'actionneur 26 comprend en outre un élément de montage 59 qui est constitué par une matière de remplissage ou d'encapsulation de façon étanche, en particulier une matière thermoplastique telle qu'une matière à base de polyamide, qui éventuellement est élastique.

Cet élément de montage 59 remplit l'espace en creux 60 ménagé dans la cavité 34, autour du corps 3 du vérin thermique 2 et autour de la pastille thermique 10, et dans les rainures précitées recevant les languettes de connexion électrique 44 et 51, en recouvrant ces dernières et en laissant découvertes leurs parties d'extrémité 57 et 58 de connexion électrique extérieure.

L'actionneur 26 peut être fabriqué de manière suivante.

On fabrique le support 27 comme décrit précédemment.

On l'équipe des languettes 44 et 51.

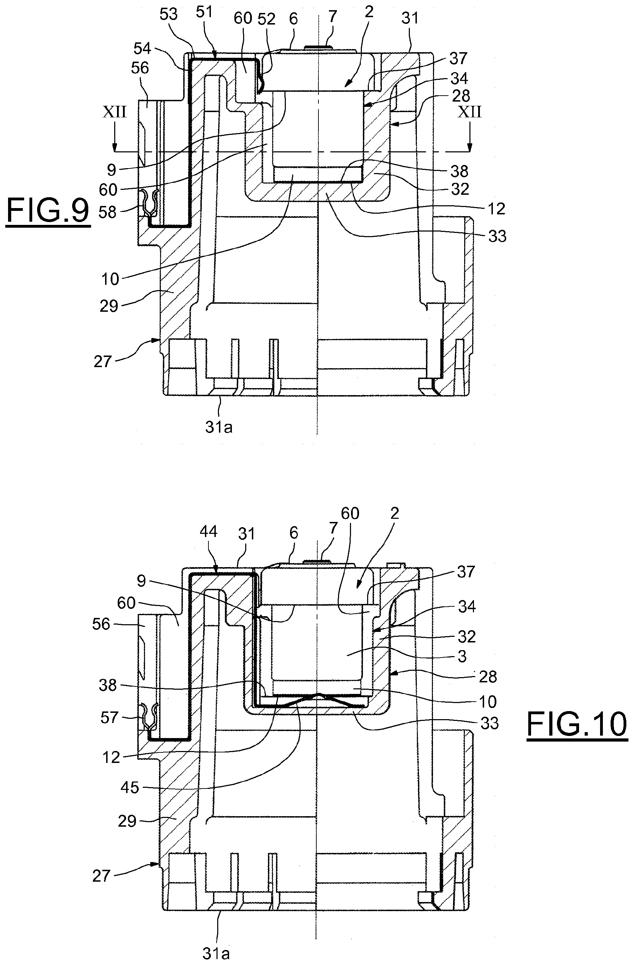

Comme le montre plus particulièrement les figures 9 à 13, on empile dans la cavité 34 le vérin thermique 2 et la pastille 10 en plaçant entre eux une couche 14 en un matériau conducteur thermique et électrique.

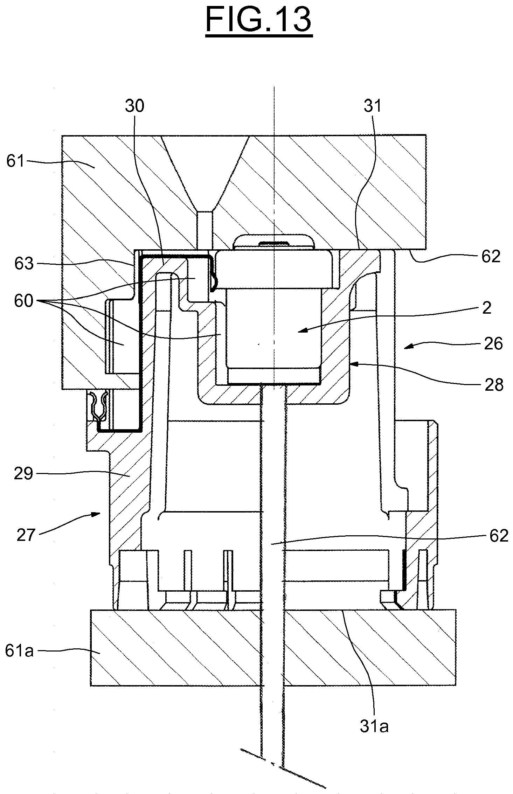

Comme le montre la figure 13, on place cet ensemble monté sur une machine d'injection qui comprend une table 61a sur laquelle on pose la face arrière 31a du support 27, en orientant sa cavité 34 vers le haut, et qui comprend une partie de moule 61b qui présente une face 62 qui vient en appui sur la face avant 31 du support 27 et sur la face avant 6 du corps 3 du vérin thermique 2 et qui présente une face latérale 63 qui est en appui contre la face latérale de la partie cylindrique extérieure 29 du support 27.

Ainsi, le support 27 et la partie de moule 61 déterminent l'espace creux 60 correspondant à l'élément de montage 59 à fabriquer.

Ensuite, on injecte dans cet espace creux 60, par exemple par un orifice 64 de la partie de moule 58, la matière de remplissage choisie.

Après son enlèvement de la machine d'injection, on obtient l'actionneur 26 terminé tel que représenté sur les figures 5 et 6.

La branche 45 de la languette 44 exerce une pression vers l'avant permettant d'appliquer la pastille 10 contre la face arrière du corps 3 du vérin thermique 2, par l'intermédiaire de la couche conductrice 14. Néanmoins, il est avantageux que la machine d'injection comprenne un poussoir 62 qui traverse la paroi radiale 33 et qui pousse la pastille thermique 10 de façon à l'appliquer contre la face arrière 5 du corps 3 du vérin thermique 2, de façon à bien étendre la couche 14 entre la face arrière du corps 3 du vérin thermique 2 et la face avant 11 de la pastille chauffante 10 et à éviter que la matière de remplissage ne pénètre entre ces faces 5 et 11.

Il résulte de ce qui précède que la matière de remplissage constituant l'élément de montage 59 assure le maintien ou contribue au maintien du vérin thermique 2, de la pastille chauffante 10 et des languettes de connexion électriques 44 et 51 et assure leur montage de façon étanche.

Bien entendu, le support 27 est équipé ou présente des moyens permettant l'installation de l'actionneur 26 dans un appareillage à commander mécaniquement sous l'effet de la tige d'actionnement 7 du vérin thermique 2. En outre, cet appareillage comprend des moyens pour piloter thermiquement la pastille thermique 10 via les languettes de connexion électrique 44 et 51, en connectant électriquement les extrémités extérieures 56 et 57 de ces dernières. Les efforts entre le corps 3 du vérin thermique 2 et le support 27 sont uniquement repris par l'épaulement 9 du vérin thermique 2 et l'extrémité avant des nervures 36 du support 27, sans contraindre la pastille chauffante 10.

La présente invention ne se limite pas aux exemples ci-dessus décrits. D'autres variantes sont possibles sans sortir du cadre défini par les revendications annexées.

## Revendications

1. Procédé de fabrication d'un actionneur comprenant un vérin thermique comprenant un corps, qui présente une face arrière, une face périphérique et une face avant, et une tige d'actionnement traversant la face avant du corps, et comprenant en outre une pastille thermique de chauffage et/ou de refroidissement, dont une face avant est couplée thermiquement à la face arrière du corps, et un élément de montage présentant une partie annulaire entourant au moins une partie arrière de la face périphérique du corps et la face périphérique de la pastille thermique et une partie arrière recouvrant au moins partiellement la face arrière de la pastille thermique, **caractérisé par le fait qu'**il consiste :
à placer, dans une cavité (20, 34) d'un moule, la pastille thermique (10) et le vérin thermique (2), ladite cavité étant telle qu'il subsiste un espace en creux (21, 60) correspondant audit élément de montage à réaliser (15, 59) ;
et à injecter, dans ledit espace, une matière plastique de remplissage, de façon à constituer un élément de montage (15, 59).

2. Procédé selon la revendication 1, **caractérisé par le fait que** ladite matière plastique de remplissage est élastique.

3. Procédé selon l'une des revendications 1 et 2, **caractérisé par le fait que** ladite matière de remplissage comprend une matière thermoplastique.

4. Procédé selon l'une quelconque des revendications précédentes, **caractérisé par le fait qu'**il consiste à interposer, entre la face avant de la pastille thermique et la face arrière du corps du vérin, une couche (14) en un matériau conducteur électrique et thermique.

5. Procédé selon l'une quelconque des revendications précédentes, **caractérisé par le fait qu'**il consiste à exercer une pression d'application de la face avant de la pastille thermique sur la face arrière du corps du vérin.

6. Actionneur comprenant un vérin thermique comprenant un corps, qui présente une face arrière, une face périphérique et une face avant, et une tige d'actionnement traversant la face avant du corps, et comprenant en outre une pastille thermique constituant une résistance électrique, dont une face avant est couplée thermiquement à la face arrière du corps, et un élément de montage présentant une partie annulaire entourant la face périphérique du corps et celle de la pastille thermique et une partie arrière recouvrant partiellement la face arrière de la pastille thermique, **caractérisé par le fait que** ledit élément de montage (15, 59) est en une matière élastique.

7. Actionneur selon la revendication 6, **caractérisé par le fait que** ledit élément de montage comprend une matière thermoplastique.

8. Actionneur selon l'une des revendications 6 et 7, **caractérisé par le fait qu'**il comprend, entre la face avant de la pastille thermique et la face arrière du corps du vérin, une couche (14) en un matériau conducteur électrique et thermique.

9. Actionneur selon l'une quelconque des revendications 6 à 8, **caractérisé par le fait que** la face périphérique du corps du vérin présente au moins une partie en creux, ledit élément de montage pénétrant dans cette partie en creux.

10. Procédé de fabrication d'un actionneur comprenant un vérin thermique comprenant un corps, qui présente une face arrière, une face périphérique et une face avant, et une tige d'actionnement traversant la face avant du corps, et comprenant en outre une pastille thermique comprenant une résistance électrique, dont une face avant est couplée thermiquement à la face arrière du corps, et un support comprenant une cavité de réception du corps et de la pastille thermique, **caractérisé par le fait qu'**il consiste :
à fabriquer un support (27) comprenant une cavité (34) dont la paroi présente des parties de positionnement (36) destinées à être en contact avec le corps (3) du vérin thermique (2) et la pastille thermique (10) et au moins une partie en creux destinée à former avec le corps et la pastille thermique un espace en creux (60) ;
à placer la pastille thermique (10) et le corps (3) du vérin thermique (2) dans ladite cavité (34) ;
et à injecter, dans ledit espace en creux (60), une matière de remplissage.

11. Procédé selon la revendication 10, **caractérisé par le fait qu'**il consiste :
à fabriquer un support dont ladite partie en creux est ouverte vers l'extérieur ;
à placer la pastille thermique et le corps du vérin dans ladite cavité ;
à fermer ledit espace en creux par un moule (61) ;
et à injecter, dans ledit espace en creux, une matière de remplissage constituant un élément de montage (59).

12. Procédé selon l'une des revendications 10 et 11, **caractérisé par le fait qu'**il consiste à fabriquer un support muni de languettes de connexion électrique (44, 51) s'étendant dans ladite cavité et destinées à venir en contact avec la face arrière de la pastille thermique et la face périphérique du corps du vérin.

13. Procédé selon l'une quelconque des revendications 10 à 12, **caractérisé par le fait qu'**il consiste :
à fabriquer un support dont la partie en creux est ouverte vers l'extérieur et présentant des gorges extérieures prolongeant ladite cavité ;
à munir ledit support de languettes de connexion électrique (44, 51) s'étendant dans ladite cavité et dans lesdites gorges extérieures et destinées à venir en contact avec la face arrière de la pastille thermique et la face périphérique du corps du vérin ;
à fermer ledit espace en creux et lesdites gorges par un moule ;
et à injecter ladite matière de remplissage dans ledit espace en creux et lesdites gorges.

14. Procédé selon l'une quelconque des revendications 10 à 13, **caractérisé par le fait qu'**il consiste à exercer une pression d'application de la face avant de la pastille thermique sur la face arrière du corps du vérin.

15. Actionneur comprenant un vérin thermique comprenant un corps, qui présente une face arrière, une face périphérique et une face avant, et une tige d'actionnement traversant la face avant du corps, et comprenant en outre une pastille thermique comprenant une résistance électrique, dont une face avant est couplée thermiquement à la face arrière du corps, et un support comprenant une cavité de réception du corps du vérin et de la pastille thermique, **caractérisé par le fait que** ledit support (27) délimite un espace en creux (60) comprenant une partie annulaire entourant au moins une partie arrière de la face périphérique du corps du vérin thermique (2) et la face périphérique de la pastille thermique (10) et une partie arrière correspondant au moins en partie à la face arrière de la pastille thermique ; et que ledit espace en creux (60) est rempli d'une matière de remplissage constituant un élément de montage (59).

16. Actionneur selon la revendication 15, **caractérisé par le fait que** ledit support comprend, dans ladite cavité (34), des moyens de positionnement (36) du corps du vérin thermique (2) et de la pastille thermique (10).

17. Actionneur selon l'une des revendications 15 et 16, **caractérisé par le fait que** ledit support comprend, dans ladite cavité, des nervures en saillie (36), le corps du vérin (2) présentant un épaulement (9) périphérique avant en appui sur lesdites nervures (36).

18. Actionneur selon l'une quelconque des revendications 15 à 17, **caractérisé par le fait que** ledit espace en creux (60) s'étend jusqu'à une face avant (31) du support (27).

19. Actionneur selon l'une quelconque des revendications 15 à 18, **caractérisé par le fait qu'**il comprend des languettes de connexion électrique extérieure (44, 51) s'étendant dans ledit espace et en contact respectivement avec la face arrière de la pastille thermique et le corps du vérin.

20. Actionneur selon la revendication 19, **caractérisé par le fait que** le support présente des gorges extérieures débouchant dans ledit espace et dans lesquelles s'étendent lesdites languettes de connexion électrique.

21. Actionneur selon la revendication 20, **caractérisé par le fait que** lesdites gorges sont remplies, au moins en partie, par ladite matière de remplissage.

22. Actionneur selon l'une quelconque des revendications 19 à 21, **caractérisé par le fait que** le support comprend un évidement extérieur (56) de réception d'un connecteur électrique, lesdites languettes (44, 51) comprenant des parties (57, 58) adaptées pour venir en contact avec des contacts électriques de ce connecteur électrique.

23. Actionneur selon l'une quelconque des revendications 15 à 22, **caractérisé par le fait que** la matière de remplissage est un thermoplastique.

## Patentansprüche

1. Verfahren zur Herstellung eines Aktuators, umfassend einen thermischen Zylinder, umfassend einen Körper, der eine Rückseite, eine Umfangsfläche und eine Vorderseite aufweist, und eine Betätigungsstange, die durch die Vorderseite des Körpers hindurchgeht, und ferner umfassend eine Wärmepastille zum Heizen und/oder Kühlen, deren Vorderseite thermisch mit der Rückseite des Körpers gekoppelt ist, und ein Montageelement, das einen ringförmigen Abschnitt, der zumindest einen hinteren Teil der Umfangsfläche des Körpers und die Umfangsfläche der Pastille umgibt, und einen hinteren Abschnitt aufweist, der zumindest teilweise die Rückseite der Wärmepastille bedeckt, **dadurch gekennzeichnet, dass** es darin besteht:
in einem Hohlraum (20, 34) einer Form die Wärmepastille (10) und den thermischen Zylinder (2) anzuordnen, wobei der Hohlraum derart ist, dass ein hohler Bereich (21, 60) bestehen bleibt, der dem herzustellenden Montageelement (15, 59) entspricht;
und in den Bereich einen Füllkunststoff einzuspritzen, um ein Montageelement (15, 59) zu bilden.

2. Verfahren nach Anspruch 1, **dadurch gekennzeichnet, dass** der Füllkunststoff elastisch ist.

3. Verfahren nach einem der Ansprüche 1 und 2, **dadurch gekennzeichnet, dass** der Füllkunststoff ein thermoplastisches Material umfasst.

4. Verfahren nach einem der vorhergehenden Ansprüche, **dadurch gekennzeichnet, dass** es darin besteht, zwischen der Vorderseite der Wärmepastille und der Rückseite des Körpers des Zylinders eine Schicht (14) aus einem elektrisch und thermisch leitenden Material zwischenzufügen.

5. Verfahren nach einem der vorhergehenden Ansprüche, **dadurch gekennzeichnet, dass** es darin besteht, einen Anpressdruck der Vorderseite der Wärmepastille an die Rückseite des Körpers des Zylinders auszuüben.

6. Aktuator, umfassend einen thermischen Zylinder, umfassend einen Körper, der eine Rückseite, eine Umfangsfläche und eine Vorderseite aufweist, und eine Betätigungsstange, die durch die Vorderseite des Körpers hindurchgeht, und ferner umfassend eine Wärmepastille, die einen elektrischen Widerstand bildet, deren Vorderseite thermisch mit der Rückseite des Körpers gekoppelt ist, und ein Montageelement, das einen ringförmigen Abschnitt, der zumindest einen hinteren Teil der Umfangsfläche des Körpers und die Umfangsfläche der Pastille umgibt, und einen hinteren Abschnitt aufweist, der zumindest teilweise die Rückseite der Wärmepastille bedeckt, **dadurch gekennzeichnet, dass** das Montageelement (15, 59) aus einem elastischen Material ist.

7. Aktuator nach Anspruch 6, **dadurch gekennzeichnet, dass** das Montageelement ein thermoplastisches Material umfasst.

8. Aktuator nach einem der Ansprüche 6 und 7, **dadurch gekennzeichnet, dass** er zwischen der Vorderseite der Wärmepastille und der Rückseite des Körpers des Zylinders eine Schicht (14) aus einem elektrisch und thermisch leitenden Material umfasst.

9. Aktuator nach einem der Ansprüche 6 bis 8, **dadurch gekennzeichnet, dass** die Umfangsfläche des Körpers des Zylinders mindestens einen hohlen Abschnitt aufwiest, wobei das Montageelement in diesen hohlen Abschnitt eindringt.

10. Verfahren zur Herstellung eines Aktuators, umfassend einen thermischen Zylinder, umfassend einen Körper, der eine Rückseite, eine Umfangsfläche und eine Vorderseite aufweist, und eine Betätigungsstange, die durch die Vorderseite des Körpers hindurchgeht, und ferner umfassend eine Wärmepastille, umfassend einen elektrischen Widerstand, deren Vorderseite thermisch mit der Rückseite des Körpers gekoppelt ist, und einen Träger, umfassend einen Aufnahmehohlraum des Körpers und der Wärmepastille, **dadurch gekennzeichnet, dass** es darin besteht:
einen Träger (27) herzustellen, umfassend einen Hohlraum (34), dessen Wand Positionierungsabschnitte (36) aufweist, die dazu bestimmt sind, mit dem Körper (3) des thermischen Zylinders (2) und der Wärmepastille (10) in Kontakt zu sein, und mindestens einen hohlen Abschnitt, der dazu bestimmt ist, mit dem Körper und der Wärmepastille einen hohlen Bereich (60) zu bilden;
die Wärmepastille (10) und den Körper (3) des Wärmezylinders (2) in dem Hohlraum (34) anzuordnen;
und in den hohlen Bereich (60) ein Füllmaterial einzuspritzen.

11. Verfahren nach Anspruch 10, **dadurch gekennzeichnet, dass** es darin besteht:
einen Träger herzustellen, dessen hohler Abschnitt nach außen offen ist;
die Wärmepastille und den Körper des Zylinders in dem Hohlraum anzuordnen;
den hohlen Bereich durch eine Form (61) zu schließen;
und in den hohlen Bereich ein Füllmaterial einzuspritzen, das ein Montageelement (59) bildet.

12. Verfahren nach einem der Ansprüche 10 und 11, **dadurch gekennzeichnet, dass** es darin besteht, einen Träger herzustellen, der mit elektrischen Anschlusslaschen (44, 51) versehen ist, die sich in dem Hohlraum erstrecken und dazu bestimmt sind, mit der Rückseite der Wärmepastille und der Umfangsfläche des Körpers des Zylinders in Kontakt zu kommen.

13. Verfahren nach einem der Ansprüche 10 bis 12, **dadurch gekennzeichnet, dass** es darin besteht:
einen Träger herzustellen, dessen hohler Abschnitt nach außen offen ist und äußere Rillen aufweist, die den Hohlraum verlängern;
den Träger mit elektrischen Anschlusslaschen (44, 51) zu versehen, die sich in dem Hohlraum und in den äußeren Rillen erstrecken und dazu bestimmt sind, mit der Rückseite der Wärmepastille und der Umfangsfläche des Körpers des Zylinders in Kontakt zu kommen;
den hohlen Bereich und die Rillen durch eine Form zu verschließen;
und das Füllmaterial in den Hohlraum und die Rillen einzuspritzen.

14. Verfahren nach einem der Ansprüche 10 bis 13, **dadurch gekennzeichnet, dass** es darin besteht, einen Anpressdruck der Vorderseite der Wärmepastille an die Rückseite des Körpers des Zylinders auszuüben.

15. Aktuator, umfassend einen thermischen Zylinder, umfassend einen Körper, der eine Rückseite, eine Umfangsfläche und eine Vorderseite aufweist, und eine Betätigungsstange, die durch die Vorderseite des Körpers hindurchgeht, und ferner umfassend eine Wärmepastille, die einen elektrischen Widerstand umfasst, deren Vorderseite thermisch mit der Rückseite des Körpers gekoppelt ist, und einen Träger, umfassend einen Aufnahmehohlraum für den Körper des Zylinders und die Wärmepastille, **dadurch gekennzeichnet, dass** der Träger (27) einen hohlen Bereich (60) begrenzt, umfassend einen ringförmigen Abschnitt, der zumindest einen hinteren Abschnitt der Umfangsfläche des Körpers des thermischen Zylinders (2) und die Umfangsfläche der Wärmepastille (10) umgibt, und einen hinteren Abschnitt, der zumindest teilweise der Rückseite der Wärmepastille entspricht; und dass der hohle Bereich (60) mit einem Füllmaterial gefüllt ist, das ein Montageelement (59) bildet.

16. Aktuator nach Anspruch 15, **dadurch gekennzeichnet, dass** der Träger in dem Hohlraum (34) Mittel (36) zur Positionierung des Körpers des thermischen Zylinders (2) und der Wärmepastille (10) umfasst.

17. Aktuator nach einem der Ansprüche 15 und 16, **dadurch gekennzeichnet, dass** der Träger in dem Hohlraum vorspringende Rippen (36) umfasst, wobei der Körper des Zylinders (2) einen vorderen Umfangsvorsprung (9) aufweist, der auf den Rippen (36) aufliegt.

18. Aktuator nach einem der Ansprüche 15 bis 17, **dadurch gekennzeichnet, dass** sich der hohle Bereich (60) bis zu einer Vorderseite (31) des Trägers (27) erstreckt.

19. Aktuator nach einem der Ansprüche 15 bis 18, **dadurch gekennzeichnet, dass** er äußere elektrische Anschlusslaschen (44, 51) umfasst, die sich in dem Bereich erstrecken und mit der Rückseite der Wärmepastille bzw. dem Körper des Zylinders in Kontakt sind.

20. Aktuator nach Anspruch 19, **dadurch gekennzeichnet, dass** der Träger äußere Rillen aufweist, die in den Bereich münden, und in denen sich die elektrischen Anschlusslaschen erstrecken.

21. Aktuator nach Anspruch 20, **dadurch gekennzeichnet, dass** die Rillen zumindest teilweise mit dem Füllmaterial gefüllt sind.

22. Aktuator nach einem der Ansprüche 19 bis 21, **dadurch gekennzeichnet, dass** der Träger eine äußere Ausnehmung (56) zur Aufnahme eines elektrischen Verbinders umfasst, wobei die Laschen (44, 51) Abschnitte (57, 58) umfassen, die geeignet sind, mit elektrischen Kontakten dieses elektrischen Verbinders in Kontakt zu kommen.

23. Aktuator nach einem der Ansprüche 15 bis 22, **dadurch gekennzeichnet, dass** das Füllmaterial ein Thermoplast ist.

## Claims

1. Method for manufacturing an actuator comprising a thermal ram comprising a body, which has a rear face, a peripheral face and a front face, and an actuating stem passing through the front face of the body, and also comprising a thermal pellet for heating and/or cooling, a front face of which is thermally coupled to the rear face of the body, and a mounting element having an annular part surrounding at least a rear part of the peripheral face of the body and the peripheral face of the thermal pellet and a rear part at least partially covering the rear face of the thermal pellet, **characterized in that** it consists:
in placing, in a cavity (20, 34) of a mould, the thermal pellet (10) and the thermal ram (2), said cavity being such that it leaves a recessed space (21, 60) corresponding to said mounting element (15, 59) to be produced;
and in injecting, into said space, a plastics filling material so as to form a mounting element (15, 59) .

2. Method according to Claim 1, **characterized in that** said plastics filling material is elastic.

3. Method according to either of Claims 1 and 2, **characterized in that** said filling material comprises a thermoplastic material.

4. Method according to any one of the preceding claims, **characterized in that** it consists in interposing, between the front face of the thermal pellet and the rear face of the body of the ram, a layer (14) of an electrically and thermally conductive material.

5. Method according to any one of the preceding claims, **characterized in that** it consists in exerting a contact pressure of the front face of the thermal pellet on the rear face of the body of the ram.

6. Actuator comprising a thermal ram comprising a body, which has a rear face, a peripheral face and a front face, and an actuating stem passing through the front face of the body, and also comprising a thermal pellet forming an electrical resistor, a front face of which is thermally coupled to the rear face of the body, and a mounting element having an annular part surrounding the peripheral face of the body and that of the thermal pellet and a rear part partially covering the rear face of the thermal pellet, **characterized in that** said mounting element (15, 59) is made of an elastic material.

7. Actuator according to Claim 6, **characterized in that** said mounting element comprises a thermoplastic material.

8. Actuator according to either of Claims 6 and 7, **characterized in that** it comprises, between the front face of the thermal pellet and the rear face of the body of the ram, a layer (14) of an electrically and thermally conductive material.

9. Actuator according to any one of Claims 6 to 8, **characterized in that** the peripheral face of the body of the ram has at least one recessed part, said mounting element passing into said recessed part.

10. Method for manufacturing an actuator comprising a thermal ram comprising a body, which has a rear face, a peripheral face and a front face, and an actuating stem passing through the front face of the body, and also comprising a thermal pellet comprising an electrical resistor, a front face of which is thermally coupled to the rear face of the body, and a support comprising a cavity for receiving the body and the thermal pellet, **characterized in that** it consists:
in manufacturing a support (27) comprising a cavity (34), the wall of which has positioning parts (36) intended to be in contact with the body (3) of the thermal ram (2) and the thermal pellet (10), and at least one recessed part intended to form a recessed space (60) with the body and the thermal pellet;
in placing the thermal pellet (10) and the body (3) of the thermal ram (2) in said cavity (34);
and in injecting a filling material into said recessed space (60).

11. Method according to Claim 10, **characterized in that** it consists:
in manufacturing a support, said recessed part of which is open towards the outside;
in placing the thermal pellet and the body of the ram in said cavity;
in closing said recessed space with a mould (61);
and in injecting a filling material forming a mounting element (59) into said recessed space.

12. Method according to either of Claims 10 and 11, **characterized in that** it consists in manufacturing a support provided with electrical connection tabs (44, 51) that extend in said cavity and are intended to come into contact with the rear face of the thermal pellet and the peripheral face of the body of the ram.

13. Method according to any one of Claims 10 to 12, **characterized in that** it consists:
in manufacturing a support, the recessed part of which is open towards the outside, and having exterior grooves extending said cavity;
in providing said support with electrical connection tabs (44, 51) that extend in said cavity and in said exterior grooves and are intended to come into contact with the rear face of the thermal pellet and the peripheral face of the body of the ram;
in closing said recessed space and said grooves with a mould;
and in injecting said filling material into said recessed space and said grooves.

14. Method according to any one of Claims 10 to 13, **characterized in that** it consists in exerting a contact pressure of the front face of the thermal pellet on the rear face of the body of the ram.

15. Actuator comprising a thermal ram comprising a body, which has a rear face, a peripheral face and a front face, and an actuating stem passing through the front face of the body, and also comprising a thermal pellet comprising an electrical resistor, a front face of which is thermally coupled to the rear face of the body, and a support comprising a cavity for receiving the body of the ram and the thermal pellet, **characterized in that** said support (27) delimits a recessed space (60) comprising an annular part surrounding at least a rear part of the peripheral face of the body of the thermal ram (2) and the peripheral face of the thermal pellet (10) and a rear part at least partially corresponding to the rear face of the thermal pellet; and **in that** said recessed space (60) is filled with a filling material forming a mounting element (59).

16. Actuator according to Claim 15, **characterized in that** said support comprises, in said cavity (34), means (36) for positioning the body of the thermal ram (2) and the thermal pellet (10).

17. Actuator according to either of Claims 15 and 16, **characterized in that** said support comprises, in said cavity, protruding ribs (36), the body of the ram (2) having a front peripheral shoulder (9) that rests on said ribs (36).

18. Actuator according to any one of Claims 15 to 17, **characterized in that** said recessed space (60) extends as far as a front face (31) of the support (27).

19. Actuator according to any one of Claims 15 to 18, **characterized in that** it comprises exterior electrical connection tabs (44, 51) that extend in said space and are in contact with the rear face of the thermal pellet and the body of the ram, respectively.

20. Actuator according to Claim 19, **characterized in that** the support has exterior grooves that open into said space and in which said electrical connection tabs extend.

21. Actuator according to Claim 20, **characterized in that** said grooves are filled, at least in part, with said filling material.

22. Actuator according to any one of Claims 19 to 21, **characterized in that** the support comprises an exterior recess (56) for receiving an electrical connector, said tabs (44, 51) comprising parts (57, 58) that are suitable for coming into contact with the electrical contacts of this electrical connector.

23. Actuator according to any one of Claims 15 to 22, **characterized in that** the filling material is a thermoplastic.
